# EUROPEAN PATENT SPECIFICATION

(11) **EP 1 569 393 B1**
(45) Date of publication and mention of the grant of the patent: **10.01.2007**
(21) Application number: 04251131.1
(22) Date of filing: 27.02.2004
(51) Int. Cl.: H04L 12/56, H04Q 7/32

(54) **Apparatus, and associated method, for facilitating network selection by a mobile node pursuant to a packet data communication service**
Vorrichtung und zugehöriges Verfahren zur Erleichterung der Netzwerkauswahl durch ein mobiles Endgerät für einen Packetdatenkommunikationsdienst
Dispositif et procédé associé pour faciliter la sélection de réseau par un noeud mobile pour un service de communication de données par paquets

(43) Date of publication of application: 31.08.2005
(73) Proprietor: Research In Motion Limited, Waterloo, Ontario N2L 3W8 (CA)
(72) Inventor: Buckley, Adrian, Brentwood, CA 94513 (US); Asthana, Atul, Unionville, Ontario L3R 2Y1 (CA); Bumiller, George Baldwin, Ramsey, New Jersey 07446 (US); Sundresh, Bokinakare Subbarao, Basingstoke, Hampshire RG22 5UR (GB)
(74) Representative: Hibbert, Juliet Jane Grace

(56) References cited:
- EP-A- 0 781 064
- WO-A-01/26409
- WO-A-01/63843
- WO-A-03/045095
- US-A1- 2003 186 695
- O2, T-MOBILE: "Clarification on the use of the RAT during background scanning" 3GPP TSG-CN1 MEETING 32, TDOC N1-031689, [Online] 27 October 2003 (2003-10-27), - 31 October 2003 (2003-10-31) page 1-7, XP002290617 Retrieved from the Internet: URL:http://www.3gpp.org/ftp/tsg_cn/WG1_mm- cc-sm/TSGN1_32/Docs/N1-031689.zip> [retrieved on 2004-07-29]

## Description

The present invention relates generally to a manner by which to select, at a mobile node, a radio access network through which to communicate pursuant to a packet data service. More particularly, the present invention relates to apparatus, and an associated method, that facilitates selection at the mobile node of with which radio access network, if more than one radio access network is available, through which to communicate. Selection is dependent, e.g., on which available radio access network is able to provide packet data connectivity.

A database is created and maintained at the mobile node. The database forms a listing that indexes radio access network identities together with their associated packet data connectivity capabilities. When a mobile node roams beyond its home network, the mobile node detects which radio access networks are available through which to communicate and selects with which of the available radio access networks to communicate responsive to the listing formed of the database. Selection is made at the mobile node. And, dynamic updating of the database content better assures that the mobile node communicates with the radio access network that is best able to provide for packet data communications.

### Background of the Invention

The use of communication systems through which to communicate data pursuant to a communication service is a regular requirement in modem society. Communication data is communicated pursuant to many different types of communication services. And, many varied types of communication systems have been deployed that permit different types of communication data to be communicated. As technological advancements permit, new types of communication systems, permitting effectuation of new types of communication services, shall likely be developed and deployed. Generally, technological advancements provide for the communication of data in more efficient manners, at higher throughput rates, or in manners that better compensate for non-ideal communication conditions.

Many modem communication systems make use of digital communication techniques. The use of digital communication techniques provides various communication advantages. Improved communication efficiencies are possible when digital communication techniques are utilized. And, as a result of the improved efficiencies of communications, data throughput rates possible in a digital communication system are generally greater than data throughput rates possible in corresponding communication systems that utilize analog communication techniques. Additionally, once data is digitized, the data is communicated, if desired, during discrete intervals. Channel sharing is possible, further increasing the efficiencies of communication.

A radio communication system is an exemplary type of communication system. In a radio communication system, radio channels are defined upon radio links extending between communication stations that are parties to a communication session. Data is sent on the radio channels to communicate the data between the communication stations pursuant to a communication service. Many of such radio communication systems make use of digital communication techniques that improve the communication efficiencies of such communication systems. Due to the bandwidth limitations that are regularly associated with bandwidth allocations in many radio communication systems, the improved efficiencies provided through the use of digital communication techniques are particularly advantageously applied therein.

Various advantages are unique to radio communication systems. Because a wireline connection is not required to interconnect the communication stations of a radio communication system, communications are effectuable between communication stations between which wireline connections would be impractical or impossible. And, also because the use of a wireline connection is obviated, a radio communication system is amenable for implementation as a mobile communication system. In a mobile communication system, mobility of communications is provided to one, or more, of the communication stations.

A cellular communication system is a type of radio communication system. A cellular communication system is formed of a network infrastructure that includes a plurality of spaced-apart, fixed-site transceivers, referred to as base transceiver stations, over an area that is encompassed by the communication system. Each base transceiver station defines a coverage area, referred to as a cell. Mobile nodes communicate data by way of radio communication channels extending between a base transceiver station and the mobile node. Due to the spaced-apart positioning of the plurality of base transceiver stations, the power levels at which the data is required to be communicated is relatively low, and the same frequencies are reusable at different base transceiver stations according to a cell reuse pattern. Relatively efficient utilization of the bandwidth allocated to the radio communication system is facilitated.

Successive generations of cellular communication systems have been developed and the network infrastructures of which have been deployed throughout significant portions of the populated areas of the world. The network infrastructures of more than one generation of cellular communication systems might, for instance, be installed to be operable concurrently with systems of other generations over a common geographic area. And separate networks, operated by separate network operators, of the same generation, might also be installed to be operable over a common geographic area.

Authorization that is granted to a mobile node to communicate with a selected network is based, generally, upon a service subscription purchased by a user of the mobile node. Generally, pursuant to the service subscription, a home network is associated with the mobile node, typically a network that is installed to encompass an area in which the user of the mobile node is anticipated to be positioned most regularly. Due to the inherent mobility of a mobile node, the mobile node might roam, subsequently to be positioned beyond communication range of the home network and within range, instead, of one or more visited networks.

When roaming beyond the home network, the mobile node is able to communicate through one or more of the visited networks, depending, for instance, upon the operating protocols and capabilities of the visited networks and agreements entered into between the operators of the visited networks and the home network. When more than one network is available to a mobile node through which to communicate, a decision is made as to which of the available networks that the mobile node communicates. Conventional mechanisms are used including the use of a defined set of preferred roaming partners. An operator of the home network associated with the mobile node maintains a list of preferred networks that are to be used through which to communicate when the mobile node roams beyond the home network. Historically, the preferred roaming lists are based upon the visiting networks having voice capability, i.e., having the capability of transceiving voice data.

Increasingly, however, cellular communication systems, and mobile nodes operable therein, provide for packet communication services. Many new networks provide for the packet data services while some legacy networks provide only for circuit-switched, voice data communication services. When packet communication services are to be effectuated by a roaming mobile node, selection of the visited network through which to communicate based upon merely the capacity of a visited network to handle voice communications is inadequate to ensure that a packet data communication service shall be acceptably effectuated in such network.

Published documents EP A 0781064 and WO01/63843 disclose mobile communication systems and apparatus for use therein that pertain, generally, to packet communications.

Accordingly, an improved manner by which to select a network through which a roaming node communicates is needed.

It is in light of this background information related to the communication of packet-formatted data in a radio communication system that the significant improvements of the present invention have evolved.

### Summary of the Invention

The invention is set out in the claims.

The present invention, accordingly, advantageously provides apparatus, and an associated method, by which to select, at a mobile node, a radio access network through which to communicate pursuant to a packet data service.

Through operation of an embodiment of the present invention, a manner is provided by which to facilitate selection at the mobile node of with which radio access network through which the mobile node communicates when the mobile node roams beyond its home network.

In one aspect of the present invention, selection is dependent, amongst other things, on which available radio access network is able to provide packet data connectivity. When the mobile node is operating, or plans to operate, to effectuate a packet data communication service, and the mobile node roams beyond its home network, the mobile node detects which radio access networks are available through which to communicate. And, of the available networks, the mobile node selects with which of the networks to communicate. When the mobile node is to effectuate a packet data service, the selection is dependent, in part, upon whether the available radio access network provides packet data connectivity. Determinations of network capabilities are dynamically made, or at least updated, and decisions are made by the mobile node, not prescribed by a network operator.

In another aspect of the present invention, the mobile node includes a storage element at which values defining a database are stored. The database forms a listing that lists identities of radio access networks together with their communication capacities. The communication capacities include, for instance, indications of whether the network, identified by its identifier, provides packet data connectivity or provides voice data connectivity, or provides both packet data and voice data connectivity. The database is accessed to facilitate selection of the network through which the mobile node shall communicate when the mobile node roams beyond the home network of the mobile node. If a network provides for packet data connectivity, and packet data communications are to be effectuated, the network that provides for the packet data connectivity is selected to be the network through which the communications are effectuated.

The mobile node monitors messages broadcast upon broadcast channels by base transceiver stations of different networks. Monitoring of the broadcast of the messages permits the mobile node to identify which networks are available for communications as well as, also, to determine whether the networks provide specific capabilities. That is to say, the message is broadcast by separate radio access networks, identify the networks and also indicate the network's capabilities. The values stored at the database are updated with current information regarding the capabilities of the networks, thereby dynamically to maintain a current status of the network capabilities. If, for instance, the data contained in the message detected by the mobile node during its monitoring of the broadcasts indicates that a network exhibits capabilities corresponding to capabilities already recorded at the database, the database entry is affirmed. Conversely, for instance, if the message detected by the mobile node indicates a network capability that differs with that indicated in the database listing, the database listing is modified, at least to indicate the present, indicated capability. And, if the message identifies a network that does not have a corresponding database listing, the database is updated to include a listing of the network together with its communication capability, also indicated in the message. Thereby, the information contained at the database is best able to be maintained to correctly identify most-current communication capabilities of the various radio access networks into whose area of coverage that the mobile node might roam.

In another aspect of the present invention, the database is first populated with values forming a database that defines a listing of an initial set of radio access network identities together with their corresponding communication capabilities. The initial set is modified, as needed, during operation of the mobile node to monitor and detect messages broadcast by various radio access networks.

When, for instance, the radio communication system is constructed pursuant to the operating specification of a GSM (Global System for Mobile communications), messages broadcast by radio access networks identify the mobile country code (MCC) and mobile network code (MNC) that together identify the radio access network that broadcasts the message.

In another aspect of the present invention, the mobile node also includes a selector that selects with which network through which the mobile node shall communicate pursuant to a packet data service. The selector utilizes, in the selection, indications of which radio access networks are available and, of the available networks, which exhibit communication capabilities best to facilitate effectuation of the packet communication service.

Because the selection of the network with which the mobile node communicates is based upon dynamically-maintained information and also based, at least in part, upon the communication capabilities of the available networks, improved selection is provided.

In these and other aspects, therefore, apparatus, and an associated method, is provided for a radio communication system. The radio communication system has a mobile node that is selectably operable at least to communicate packet data with a network part. The network part is formed of a plurality of network portions. A first network portion of the plurality forms a home network associated with the mobile node. Selection of with which network portion of the plurality of network portions that the mobile node communicates is facilitated. A storage element is embodied at the mobile node. The storage element stores values that define a database. The database forms a listing identifying at least selected ones of the plurality of network portions together with an indication associated therewith of network portion capability to provide packet data connectivity with the mobile node to communicate packet data therewith. A selector is adapted to access the database defined at the storage element. The selector selects through which of the network portions of the plurality of network portions to communicate the packet data. Selection that is made by the selector is, at least in part, dependent upon the listing formed of the database defined at the storage element.

A more complete appreciation of the present invention and the scope thereof can be obtained from the accompanying drawings that are briefly summarized below, the following detailed description of the presently-preferred embodiments of the present invention, and the appended claims.

### Brief Description of the Drawings

Figure 1 illustrates a functional block diagram of a radio communication system in which an embodiment of the present invention is operable.
Figure 2 illustrates a message sequence diagram representing signaling generated during operation of the radio communication system shown in Figure 1.
Figure 3 illustrates a representation of an exemplary database formed pursuant to an embodiment of the present invention.
Figure 4 illustrates a representation of another exemplary database formed pursuant to an embodiment of the present invention.
Figure 5 illustrates a flow chart representative of exemplary operation of an embodiment of the present invention.
Figure 6 illustrates another exemplary flow chart, also representative of exemplary operation of an embodiment of the present invention.
Figure 7 illustrates another flow chart also representative of operation of an embodiment of the present invention.
Figure 8 illustrates another flow chart, also exemplary of operation of an embodiment of the present invention.

### Detailed Description

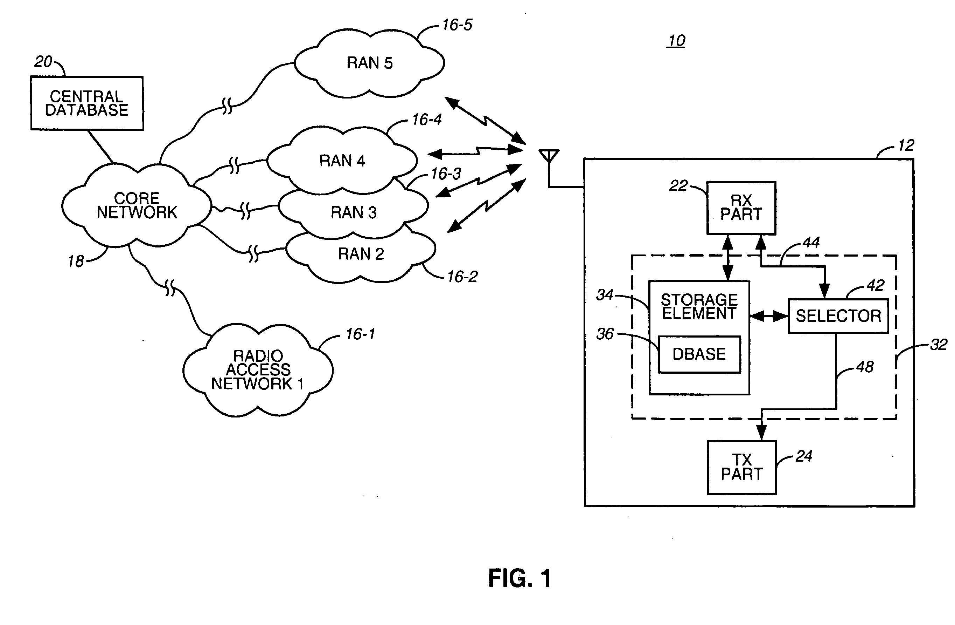

Referring first to Figure 1, a radio communication system, shown generally at 10, provides for radio communications with mobile nodes, of which the mobile node 12 is representative. The mobile node operates, selectably, to provide packet communication services and circuit-switched, e.g., voice communication services.

In the exemplary implementation, the mobile node operates at least to communicate pursuant to the operating standards and protocols of a GSM (Global System for Mobile communications) cellular communication system. In one implementation, the mobile node further forms a multi-node device, capable of communicating pursuant to two or more cellular, or other, communication standards. While the following description shall describe exemplary operation of the radio communication system in which the mobile node operates pursuant to the GSM operating protocols, in other implementations, the mobile node operates in other manners. Operation of an embodiment of the present invention is analogously implementable in other manners, pursuant to operating protocols other than the GSM operating protocols. And, analogous description of operation of the mobile node, and the radio communication system, can analogously be described with respect to its implementation in such other communication systems.

The communication system includes a network part, here having a plurality of radio access networks 16. Five radio access networks (RANs) are represented in the figure. One of the radio access networks, here radio access network 16-1, forms a home network associated with the mobile node 12. And, when the mobile node is positioned within the coverage area of its home network, communications by the mobile node are generally effectuated with the home network.

However, due to the inherent mobility of the mobile node, the mobile node is movable to be positioned at a location beyond the coverage area of the home network and in the coverage area of another network.

Others of the radio access networks are identified as 16-2, 16-3, 16-4, and 16-5. The radio access networks 16-2, 16-3, and 16-4 partially overlay one another and are representative of networks, operated by separate network operators, that are of at least partially overlapping coverage areas. And, the radio access network 16-5 is representative of another network into whose coverage area that the mobile node might roam during roaming operation beyond its home network. The separate radio access networks are suitably intercoupled, such as by way of a core network 18, or other appropriate mechanism, e.g., more than one core network, through which communication paths are formable. A central database 20 is connected to the network 18, or is otherwise accessible by way of the radio access networks 16.

The mobile node includes transceiver circuitry, here including a receiver part 22 and a transmit part 24 that are operable to receive data communicated thereto on downlink channels defined upon radio air interface and to transmit data upon uplink channels to a radio access network through which the mobile node is communicating. When the mobile node roams beyond the coverage area of the home network, the mobile node must communicate by way of another radio access network. While conventional schemes have been utilized by which to select through which radio access network that communications are to be effectuated, the conventional schemes generally rely on the use of preferred roaming lists or otherwise do not take into account the packet communication capabilities of the radio access network.

The mobile node includes apparatus 32 of an embodiment of the present invention. The apparatus facilitates selection by the mobile node of a radio access network through which to communicate when the mobile node roams beyond the home network coverage area, or otherwise does not communicate by way of its home network.

The apparatus includes a storage element 34. The storage element that defines a database 36 that forms a listing identifying radio access networks together with their respective communication capabilities. And, the apparatus includes a selector 42 that has access to the database defined at the storage element. The selector is also coupled, here represented by way of the line 44, to the receive part to receive indications of with which radio access networks broadcast messages that are detected at the mobile node. Indications of such messages are also provided to the storage element. The selector operates to select with which of the available radio access networks that the mobile node shall communicate. Indications provided to the selector on the line 44 inform the selector of which radio access networks are potential networks through which the mobile node might be able to communicate. And, access is made to the listings contained in the database to determine if the communication capability of the available radio access networks correspond to the requirements of the mobile node.

Here, when the mobile node provides, or is to provide a packet communication service, the capacity of the radio access network to provide packet communication connectivity is a significant selection criteria. Responsive to the accessed information, the selector makes selection of the radio access network with which the mobile node shall communicate and identifies the selection to the transmit part of the mobile node, here represented by way of the line 48. And, connection procedures are commenced to communicate by way of the selected radio access network.

For instance, when the mobile node roams beyond the coverage area of its home network 16-1 and into the coverage areas of the networks 16-2, 16-3, and 16-4, the mobile node receives indications of its presence in the coverage areas of the three networks. Indications are provided by way of the line 44 to the selector of the three networks 16-2, 16-3, and 16-4. The selector accesses listings in the database 36 of the identities of the corresponding networks. And, the network capabilities of the network listings are identified. Responsive to the accessed information, the selector makes selection of with which of the networks through which the mobile node shall communicate. Additionally, when the mobile node is not currently a party to a communication session or in which a communication session is not immediately anticipated, indications of the messages broadcast by the networks are monitored and used to update the contents of the database 36. Current information relating to the communication capabilities of the networks listed in the database is thereby better assured.

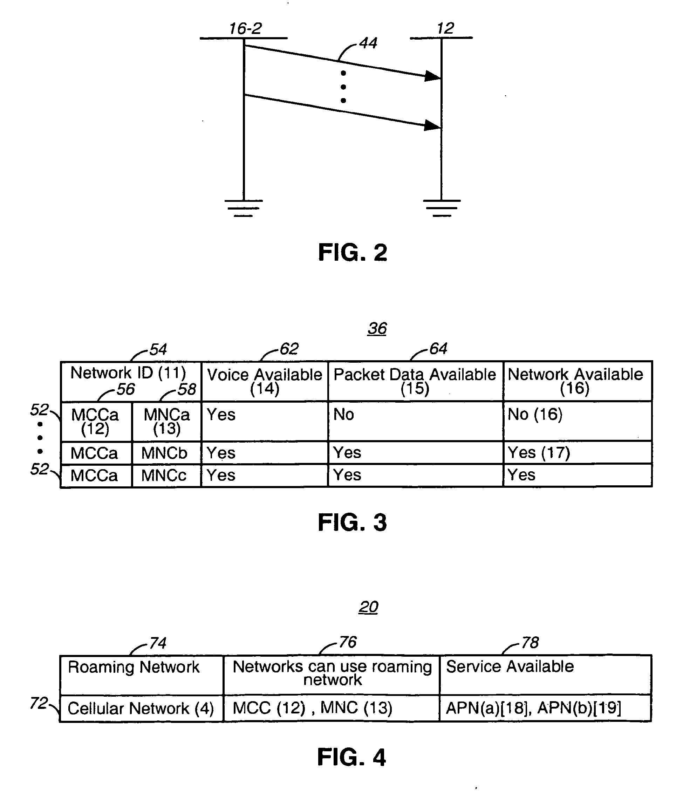

Figure 2 illustrates a message sequence diagram, shown generally at 62, representative of the broadcast of messages by a radio access network, such as the radio access network 16-2, during operation of the radio communication system 10 shown in Figure 1. Here, messages are generated at the radio access network and broadcast, indicated by the segments 44 and delivered to the mobile node 12. In the exemplary implementation in which the radio access network that broadcasts the messages is constructed generally in conformity with the GSM operating specification and provides for GPRS (General Packet Radio Service), the message is broadcast by the network form system information type 3 SI 3 rest octets that are coded to indicate GPRS capability. Messages broadcast by networks operable pursuant to other operating specifications, such as an IS-95 compliant CDMA operating specification or a UMTS operating specification are structured analogously to the messages generated by a GSM/GPRS network.

Also, when the message is broadcast by a GSM/GPRS-compliant, a mobile country code (MCC) and a mobile network code (MNC) identifies the network. Values representative of the country code and network code are contained in the messages broadcast by the network.

As network upgrades are implemented at the radio access networks to improve their communication capabilities, the messages broadcast by such networks indicate the improved capability by identifying the communication capabilities of such networks. For instance, EDGE (Enhanced Data for GSM Evolution) capabilities are implementable to upgrade GSM/GPRS networks. MSS, MMBS, and IM communication capabilities represent analogous communication upgrades.

Figure 3 illustrates a representation of an exemplary database 36 embodied at the mobile node 12 (shown in Figure 1) pursuant to an embodiment of the present invention. The database forms a plurality of listings 52 each identifying a separate network by a network identifier 54. In the exemplary implementation in which the mobile node forms a GSM/GPRS compliant device, the network identifier is formed of a mobile country code 56 and a mobile network code 58. Communication capabilities of the listed network are identified in the columns 62 and 64, here indicating whether voice services are available and packet data services are available, respectively.

In one implementation, the database is initially provisioned with values forming an initial database containing listings of selected radio access networks. GSM/GPRS/UMTS are identified by their mobile country codes and mobile network codes. Indexed together therewith are the services available, i.e., the communication capabilities, and the known APNs that are reachable by way of the associated network.

Subsequent to selection, the mobile node registers and authenticates itself with the selected network. Then, the mobile node requests and obtains a packet data service. Thereafter, the mobile node communicates with the central database 20. The database 20 is provided with the home network details of the home network of the mobile node and indicates which network in which the mobile node is registered, i.e., the selected network, together with an indication of what services are requested. The information is stored at the database 20. If another user from the same home network has already registered by way of the selected visited network, then only the services available by way of this selected network shall be updated, if required. Dynamic updating of the database categories is also permitted as incompatibilities between different implementations of a particular service are identified and as new generations of mobile networks are developed.

Figure 4 illustrates a representation of an exemplary database 20. A listing 72 contains an identity of the network 74, a roaming network indication 76, and an indication of the services available in the network in the column 78. Additional columns, for reasons just-noted, are added, as needed.

And, with respect to the database 36, the initial provisioning, in one implementation, forms an exact copy of the network database 20. In another implementation, the database 36 is initially provisioned with an abridged or compressed copy of the database 20. And, in one implementation, the database 36 is embodied on a portable memory card, such as a subscriber identity module (SIM) or the like. Analogous information is stored at the database if the mobile node is WLAN (Wireless Local Area Network) capable.

Maintenance of the central database 20 and dissemination of information stored thereat is preferably effectuated without undue increase in network traffic load, while, also, maintaining the database with up-to-date information. In one implementation, a multi-level distribution approach is utilized. The approach makes use of the roaming history of the mobile node, e.g., the countries in which the mobile node has been operated and the frequency of non-home network operation, planned roaming operation of the mobile node, e.g., identification of the countries and dates, etc.

Any of various loading and database updating procedures are carried out. For instance, the initial provisioning is performed in advance of use of the mobile node. Provisioning of a full or restricted set of central database information, depending upon the frequency bands and technologies pursuant to which the mobile node is operable. If a restricted set of data is initially provisioned, provisioning of information related to additional countries is subsequently loadable at the database. And, pursuant to anticipated trips, the database is selectively further provisioned. In one implementation, loading of data based on a specific user request triggers a local check by the mobile node, indicating any potential absence of networks in the selected countries, based on the desired APN and the home network operator associated with the mobile node. Updating of the databases with significant database changes, when the changes occur, is also permitted. For instance, such changes include addition of a first network in a selected country that has the desired APN or of potential elimination of the only network with the APN, based on the home network operator of the mobile node.

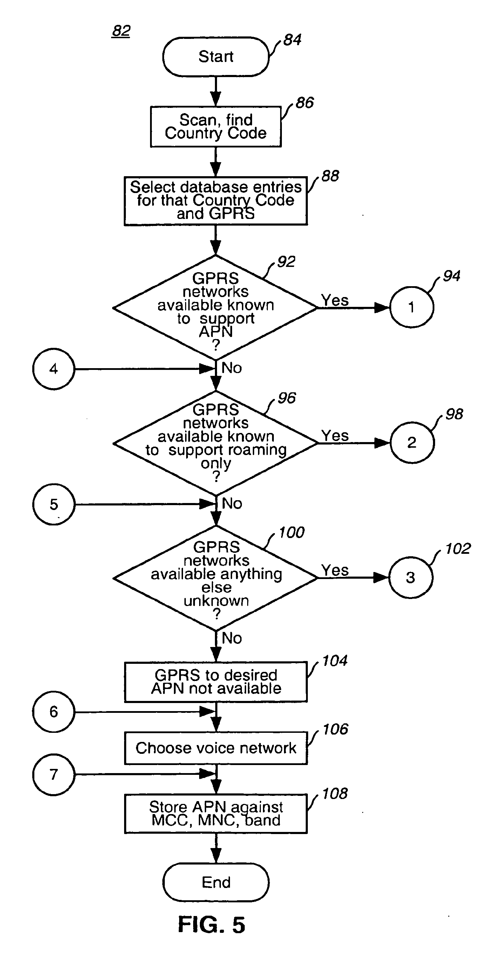

Figure 5 illustrates a flow chart, shown generally at 82, representative of operation of an embodiment of the present invention. Operations commence with the start block 84. First, and as indicated by the block 86, the mobile node scans selected channels and finds a country code identifying the country of the mobile node's location. Then, and as indicated by the block 88, database entries are selected for the identified country code that provide appropriate communication capabilities, here GPRS.

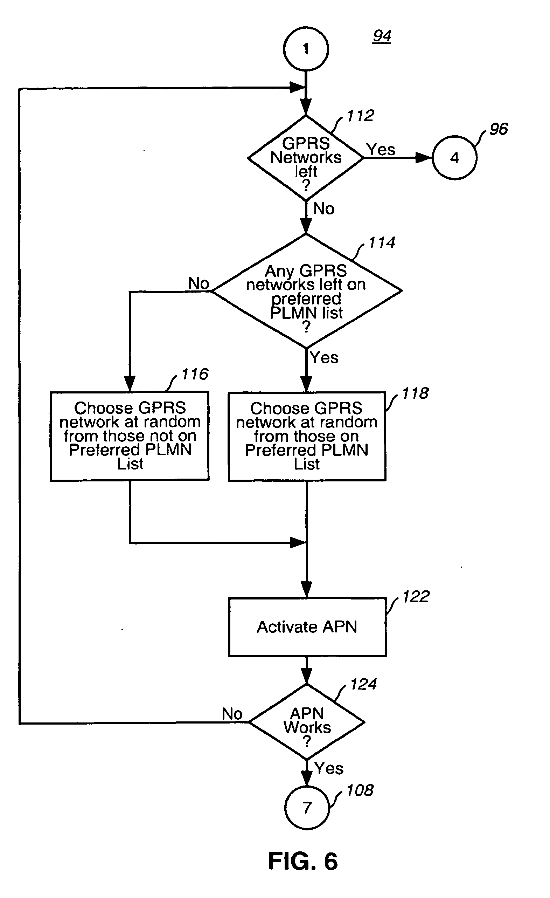

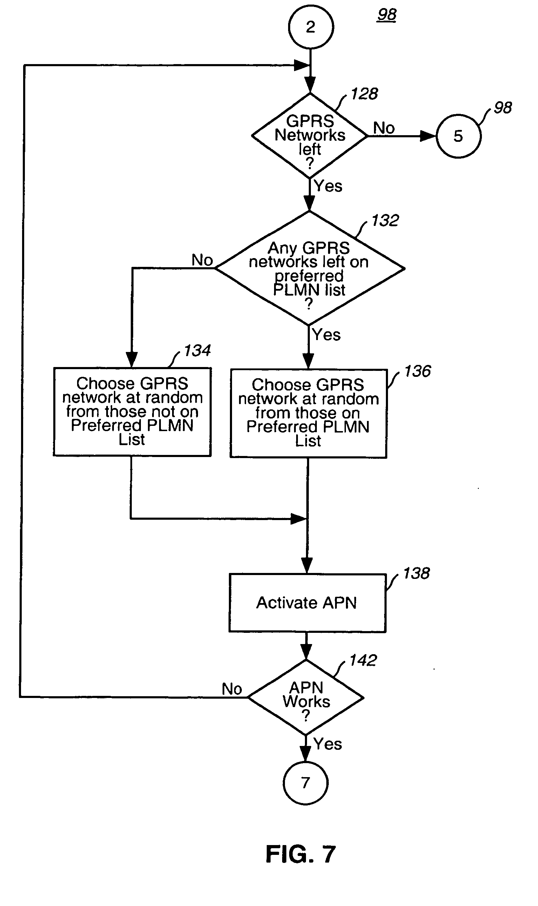

Thereafter, and as indicated by the decision block 92, a determination is made as to whether GSM networks are available that are known to support the APN. If so, a yes branch is taken to a flow chart 94, described below with respect to Figure 6. Otherwise, the no branch is taken to the decision block 96. At the decision block 96, a determination is made as to whether GPRS networks are available, known to support roaming only. If so, the yes branch is taken to the flow chart 98, described below with respect to Figure 7. Otherwise, the no branch is taken to the decision block 100.

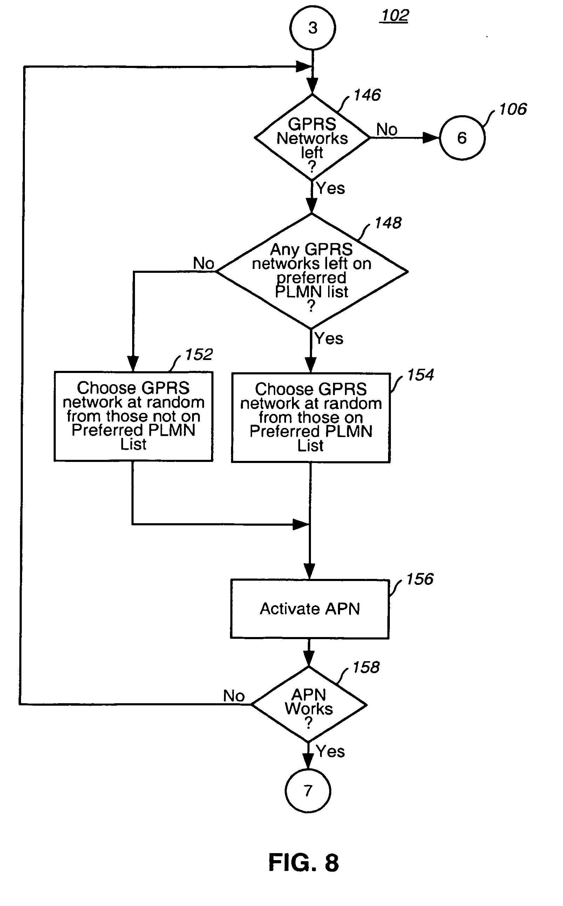

At the decision block 100, a determination is made as to whether GPRS networks are available and if anything else is unknown. If yes, the yes branch is taken to the flow chart 102, described below with respect to Figure 8. Otherwise, the no branch is taken to the block 104. And, as indicated, GPRS to the desired APN is unavailable. Then, and as indicated by the block 106, a voice network is chosen. And, as indicated by the block 108, the APN is stored at the database indexed together with a network identifier.

Figure 6 illustrates the flow chart 94. First, a determination made, indicated by the decision block 112, as to whether any GPRS networks are left. If so, the yes branch is taken back to the decision block 96, shown in Figure 5. otherwise, the no branch is taken to the decision block 114. At the decision block 114, a determination is made as to whether any GPRS networks are left on the preferred PLMN list. If not, the no branch is taken to the block 116 and a GPRS network is chosen at random from those not on a preferred PLMN list. Conversely, the yes branch is taken to the block 118. At the block 118, the GPRS is chosen at random from those on the preferred PLMN list. Branches are taken from both of the blocks 116 and 118 to the block 122 whereat the APN is activated. Thereafter, a branch is taken to the decision block 124. At the decision block 124, a determination is made as to whether the APN is working. If not, the no branch is taken back to the decision block 112. Otherwise, the yes branch is taken back to the block 108, shown in Figure 5.

Figure 7 illustrates the flow chart 98. The flow chart commences when the yes branch is taken from the decision block 96, shown in Figure 5. First, and as indicated by the decision block 128, a determination is made as to whether any GPRS networks remain. If not, the no branch is taken back to the decision block 132. At the decision block 132, a determination is made as to whether any of the remaining GPRS networks are on the preferred PLMN list. If not, the no branch is taken to the block 134. At the block 134, the GPRS network is chosen at random from the decision block, the GPRS network is chosen at random, indicated by the block 136, from those on the preferred PLMN list.

Branches from the blocks 134 and 136 extend to the block 138 whereat the APN is activated. Then, and as indicated by the decision block, 142, a determination is made as to whether the APN is working. If not, the no branch is taken back to the decision block 128. Otherwise, the yes branch is taken back to the block 108, shown in Figure 5.

Figure 8 illustrates the flow chart 102. The flow chart 102 commences when the yes branch is taken from the decision block 100, shown in Figure 5.

First, and as indicated by the decision block 146, a determination is made as to whether a GPRS network remains. If not, the no branch is taken back to the block 106, shown in Figure 5. Otherwise, the yes branch is taken to the decision block 148 whereat a determination is made as to whether any GPRS networks remain on the preferred PLMN list. If not, the no branch is taken to the block 152 whereat the GPRS network is chosen at random from those not on the preferred PLMN list. Otherwise, the yes branch is taken to the block 154 whereat the GPRS network is chosen at random from those on the preferred PLMN list.

Branches taken from the blocks 152 and 154 extend to the block 156 whereat the APN is activated. Then a branch is taken to the decision block 158 whereat a determination is made as to whether the APN is working. If not, the no branch is taken back to the block 146. Otherwise, the yes branch is taken to the block 108, shown in Figure 5.

The previous descriptions are of preferred examples for implementing the invention, and the scope of the invention should not necessarily be limited by this description. The scope of the present invention is defined by the following claims.

## Claims

1. Apparatus (32) for a radio communication system (10) having a mobile node (12) selectably operable at least to communicate packet data with a network part, the network part comprised of a plurality of radio access networks (16-1, 16-2, 16-3, 16-4, and 16-5), a first radio access network of the plurality forming a home network associated with the mobile node, said apparatus arranged to facilitate selection of with which radio access network of the plurality of radio access networks that the mobile node (12) communicates, said apparatus comprising a storage element (34) embodied at the mobile node, said storage element for storing values defining a database (36), the database forming a listing identifying at least selected ones of the plurality of radio access networks together with an indication associated therewith of radio access network capability to provide packet data connectivity with the mobile node to communicate packet data therewith, said apparatus **characterized in that**; the listing formed of the database defined at said storage element is dynamically updateable and further **characterized by**;
a detector (22) embodied at the mobile node, said detector arranged to detect messages delivered to the mobile node that are of values identifying the radio access network capabilities of associated radio access networks of the selected ones of the radio access networks and arranged to selectably alter the indication of any radio access network capability of any of the selected ones of the plurality of radio access networks of the listing formed of the database defined at said database when a message is of values identifying the radio access network capabilities to be different than identified in the listing; and
a selector (42) arranged to access the database defined at said storage element, said selector adapted to select through which of the radio access networks of the plurality of radio access networks to communicate the packet data, selection made by said selector responsive at least in part dependent upon the listing formed of the database defined at said storage element and responsive to detections made by said detector.

2. The apparatus of claim 1 wherein the network part provies means for broadcasting the messages delivered to the mobile node (12), and wherein said detector (22) provides means for selectably detecting broadcasts of the messages by the network part.

3. The apparatus (32) of claim 2 wherein at least selected ones of the radio access networks of the network part provide means for broadcasting messages of the values identifying the capabilities, wherein a selected message broadcast by a selected radio access network contains values identifying the radio access network capabilities of the selected radio access network from which the message is broadcast and wherein the detector provides means (22) for detecting the values contained in the selected message.

4. The apparatus (32) of claim 3 wherein the selected message broadcast by the selected radio access network is further of values identifying the radio access network from which the message is broadcast.

5. The apparatus (32) of claim 4 wherein each radio access network of the plurality of radio access networks is identified by an identification code and wherein the values identifying the radio access network contained in the selected message comprises the identification code.

6. The apparatus of claim 5 wherein the radio communication system (10) comprises a cellular communication system operable generally pursuant to a GSM (Global System for Mobile communications) operating protocol that defines mobile country codes and mobile network codes and wherein the values identifying the radio access network contained in the selected message comprise a mobile country code and a mobile network code associated with the radio access network from which the message is broadcast.

7. The apparatus (32) of claim 3 wherein each radio access network of the at least selected ones of the radio access networks is arranged to broadcast the messages upon broadcast channels of a set of broadcast channels and wherein said detector (22) is arranged to further selectably scan the broadcast channels of the set of broadcast channels to detect the broadcasts of the messages by the selected ones of the radio access networks.

8. The apparatus (32) of claim 6 wherein said detector (22) is further coupled to said storage element, said detector (22) further for storing at least selected values that define the database (36) at said storage element.

9. The apparatus (32) of claim 8 wherein said detector (22) provides means for further selectably removing values from the database (36) defined at said storage element (34).

10. The apparatus (32) of claim 8 wherein the database (36) defined at said storage element further indicates availability of the at least selected ones of the plurality of radio access networks through which to communicate the packet data.

11. The apparatus (32) of any preceding claim wherein the mobile node (12) is further selectably for communicating voice data and wherein the listing formed of the database (36) defined at said storage element (34) further identifies the at least selected ones of the plurality of radio access networks together with an indication associated therewith of radio access network capability to provide voice data connectivity with the mobile node to communicate voice data therewith.

12. The apparatus (32) of claim 11 wherein said selector is further selectably for selecting through which of the radio access network of the plurality of radio access networks to communicate the voice data.

13. The apparatus (32) of any preceding claim wherein the database (36) forming the listing defined at said storage element (34) is created by downloading thereto of a central database directory, the database selectably updatable thereafter.

14. A method of communicating in a radio communication system having a mobile node selectably operable at least to communicate packet data with a network part comprised of a plurality of radio access networks, a first radio access network of the plurality forming a home network associated with the mobile node, said method for at least facilitating selection of with which radio access network of the plurality of radio access networks that the mobile node communicates, said method comprising storing values defining a database, the database forming a listing identifying at least selected ones of the plurality of the radio access networks together with an indication associated therewith of radio access network capability to provide packet data connectivity with the mobile node to communicate packet data therewith, said method **characterized by**;
detecting messages delivered to that mobile node that are of values identifying the radio access network capabilities of associated radio access networks of the selected ones of the radio access networks and selectably altering the indication of any radio access network capability of any of the selected ones of the plurality of radio access networks of the listing formed during said operation of storing when a message is of values identifying the radio access network capabilities to be different than identified in the listing; and
selecting through which of the radio access networks of the plurality of radio access networks to communicate the packet data, selection made during said operation of selecting responsive at least in part dependent upon the listing formed of the database defined during said operation of storing and responsive to detection made during said operation of detecting and selectably altering.

15. The method of claim 14 wherein said operation of detecting is further performed subsequent to said operation of storing and wherein said operations of detecting and storing are iteratively performed.

16. The method of claim 14 further comprising the operation, prior to said operation of detecting, of sending the messages to the mobile node.

17. The method of claim 14 wherein the messages detected during said operation of detecting are sent to the mobile node by selected radio access networks and wherein values contained in the messages are selectably stored during said operation of storing.

18. The method of claim 17, Wherein the messages detected during said operation of detecting identify the radio access network capabilities of associated radio access networks of the selected radio access networks.

## Patentansprüche

1. Vorrichtung (32) für ein Funkkommunikationssystem (10), welches einen mobilen Knoten (12) aufweist, der selektiv betriebsfähig ist, zumindest Paketdaten mit einem Netzwerkteil zu kommunizieren, wobei der Netzwerkteil aus einer Vielzahl von Zugangsnetzwerken (16-1, 16-2, 16-3, 16-4 und 16-5) beinhaltet, wobei ein erstes Funkzugangsnetzwerk aus der Vielzahl ein Heimnetzwerk bildet, welches dem mobilen Knoten zugeordnet ist, wobei die Vorrichtung angeordnet ist, um die Auswahl, mit welchem Funkzugangsnetzwerk aus der Vielzahl der Funkzugangsnetzwerke der mobile Knoten (12) kommuniziert, zu erleichtern, wobei die Vorrichtung ein Speicherelement (34) aufweist, welches an dem mobilen Knoten enthalten ist, wobei das Speicherelement dazu dient, Werte zu speichern, die eine Datenbank (36) definieren, wobei die Datenbank eine Auflistung bildet, welche zumindest ausgewählte aus der Vielzahl von Funkzugangsnetzwerken zusammen mit einer diesem zugeordneten Anzeige einer Funkzugangsnetzwerks-Fähigkeit, eine Paketdatenverbindungsfähigkeit mit dem mobilen Knoten bereitzustellen, um Paketdaten damit zu kommunizieren, identifiziert, wobei die Vorrichtung **dadurch gekennzeichnet ist, dass** die von der Datenbank gebildete Auflistung, die an den Speicherelement festgelegt ist, dynamisch aktualisierbar ist, und weiters **gekennzeichnet durch**;
einen an dem mobilen Knoten enthaltenen Detektor (22), der angeordnet ist, um zu dem mobilen Knoten ausgelieferte Nachrichten zu detektieren, die aus Werten bestehen, welche die Funkzugangsnetzwerk-Fähigkeiten von zugeordneten Funkzugangsnetzwerken der ausgewählten der Funkzugangsnetzwerke identifizieren, und welcher Detektor angeordnet ist, um die Anzeige irgendeiner Funkzugangsnetzwerk-Fähigkeit von irgendeiner der ausgewählten der Vielzahl von Funkzugangsnetzwerken der von der Datenbank gebildeten Auflistung, die an der Datenbank festgelegt ist, selektiv zu ändern, wenn eine Nachricht aus Werten besteht, die anzeigen, dass die Funkzugangsnetzwerks-Fähigkeiten unterschiedlich sind, als dies in der Auflistung identifiziert ist; und
eine Auswahlvorrichtung (42), die angeordnet ist, um auf die an dem Speicherelement festgelegte Datenbank zuzugreifen, wobei die Auswahlvorrichtung geeignet ist, um auszuwählen, **durch** welches der Funkzugangsnetzwerke aus der Vielzahl von Funkzugangsnetzwerken die Paketdaten kommuniziert werden sollen, wobei die Auswahl von der Auswahlvorrichtung reagierend zumindest teilweise in Abhängigkeit der von der Datenbank gebildeten Liste, die an dem Speicherelement festgelegt ist, und reagierend auf die von dem Detektor vorgenommenen Detektionen getroffen wird.

2. Vorrichtung nach Anspruch 1, wobei der Netzwerkteil Mittel bereitstellt, um die zu dem mobilen Knoten (12) ausgelieferten Nachrichten auszustrahlen, und wobei der Detektor (22) Mittel bereitstellt, um Ausstrahlungen der Nachrichten von dem Netzwerkteil selektiv zu detektieren.

3. Vorrichtung (32) nach Anspruch 2, wobei zumindest ausgewählte der Funkzugangsnetzwerke des Netzwerkteils Mittel bereitstellen, um Nachrichten der Werte, welche die Fähigkeiten identifizieren, auszustrahlen, wobei eine ausgewählte Nachricht, die von einem ausgewählten Funkzugangsnetzwerk ausgestrahlt wird, Werte enthält, welche die Funkzugangsnetzwerks-Fähigkeiten des ausgewählten Funkzugangsnetzwerks, von welchem die Nachricht ausgestrahlt wird, identifizieren, und wobei der Detektor Mittel (22) bereitstellt, um die Werte, die in der ausgewählten Nachricht enthalten sind, zu detektieren.

4. Vorrichtung (32) nach Anspruch 3, wobei die ausgewählte Nachricht, die von dem ausgewählten Funkzugangsnetzwerk ausgestrahlt wird, weiters aus Werten besteht, welche das Funkzugangsnetzwerk identifizieren, von welchem die Nachricht ausgestrahlt wird.

5. Vorrichtung (32) nach Anspruch 4, wobei jedes Funkzugangsnetzwerk aus der Vielzahl von Funkzugangsnetzwerken durch einen Identifizierungscode identifiziert wird, und wobei die in der ausgewählten Nachricht enthaltenen Werte, welche das Funkzugangsnetzwerk identifizieren, den Identifikationscode aufweisen.

6. Vorrichtung nach Anspruch 5, wobei das Funkkommunikationssystem (10) ein zellulares Kommunikationssystem aufweist, welches allgemein gemäß einem GSM (Globales System für Mobilkommunikationen)-Betriebsprotokolls betriebsfähig ist, welches mobile Ländercodes und mobile Netzwerkcodes festlegt, und wobei in der ausgewählten Nachricht enthaltenen Werte, welche das Funkzugangsnetzwerk identifizieren, einen mobilen Ländercode und einen mobilen Netzwerkcode aufweise, die dem Funkzugangsnetzwerk zugeordnet sind, von dem die Nachricht ausgestrahlt wird.

7. Vorrichtung (32) nach Anspruch 3, wobei jedes Funkzugangsnetzwerk aus zumindest den ausgewählten der Funkzugangsnetzwerke angeordnet ist, um die Nachrichten auf Ausstrahlungskanälen aus einem Satz von Ausstrahlungskanälen auszustrahlen, und wobei der Detektor (22) angeordnet ist, um weiters die Ausstrahlungskanäle des Satzes von Ausstrahlungskanälen selektiv zu scannen, um die Ausstrahlung der Nachrichten von den ausgewählten der Funkzugangsnetzwerke zu detektieren.

8. Vorrichtung (32) nach Anspruch 6, wobei der Detektor (22) weiters an das Speicherelement gekoppelt ist, wobei der Detektor (22) weiters dazu dient, zumindest ausgewählte Werte, welche die Datenbank (36) festlegen, an dem Speicherelement zu speichern.

9. Vorrichtung (32) nach Anspruch 8, wobei der Detektor (22) Mittel bereitstellt, um weiters Werte von der an dem Speicherelement (34) festgelegten Datenbank (36) selektiv zu entfernen.

10. Vorrichtung (32) nach Anspruch 8, wobei die an dem Speicherelement festgelegte Datenbank (36) weiters die Verfügbarkeit von zumindest den ausgewählten aus der Vielzahl von Funkzugangsnetzwerken, durch welche die Paketdaten kommuniziert werden sollen, anzeigt.

11. Vorrichtung (32) nach einem der vorhergehenden Ansprüche, wobei der mobile Knoten (12) weiters selektiv dazu dient, Sprachdaten zu kommunizieren, und wobei die Auflistung, die von der an dem Speicherelement (34) festgelegten Datenbank (36) gebildet wird, weiters zumindest ausgewählte aus der Vielzahl von Funkzugangsnetzwerken gemeinsam mit einer diesen zugeordneten Anzeige einer Funkzugangsnetzwerks-Fähigkeit, eine Sprachdaten-Verbindungsfähigkeit mit dem mobilen Knoten bereitzustellen, um Sprachdaten damit zu kommunizieren, identifiziert.

12. Vorrichtung (32) nach Anspruch 11, wobei die Auswahlvorrichtung weiters selektiv dazu dient, auszuwählen, über welches der Funkzugangsnetzwerke aus der Vielzahl von Funkzugangsnetzwerken die Sprachdaten kommuniziert werden sollen.

13. Vorrichtung (32) nach einem der vorhergehenden Ansprüche, wobei die an dem Speicherelement (34) festgelegte Datenbank (36), welche die Auflistung bildet, erzeugt wird, indem ein zentrales Datenbankverzeichnis dorthin heruntergeladen wird, wobei die Datenbank danach selektiv aktualisierbar ist.

14. Verfahren zum Kommunizieren in einem Funkkommunikationssystem, welches einen mobilen Knoten aufweist, der selektiv betriebsfähig ist, um zumindest Paketdaten mit einem Netzwerkteil zu kommunizieren, welcher aus einer Vielzahl von Funkzugangsnetzwerken besteht, wobei ein erstes Funkzugangsnetzwerk aus der Vielzahl ein Heimnetzwerk bildet, welches dem mobilen Knoten zugeordnet ist, wobei das Verfahren dazu dient, die Auswahl, mit welchem Funkzugangsnetzwerk aus der Vielzahl von Funkzugangsnetzwerken der mobile Knoten kommuniziert, zumindest zu erleichtern, wobei das Verfahren das Speichern von Werten aufweist, welche eine Datenbank festlegen, wobei die Datenbank eine Auflistung bildet, welche zumindest ausgewählte aus der Vielzahl von Funkzugangsnetzwerken zusammen mit einer diesen zugeordneten Anzeige einer Funkzugangsnetzwerk-Fähigkeit, um eine Paketdaten-Verbindungsfähigkeit mit dem mobilen Knoten bereitzustellen, um damit Paketdaten zu kommunizieren, identifiziert, wobei das Verfahren **gekennzeichnet ist durch**;
Detekieren von zu dem mobilen Knoten ausgelieferten Nachrichten, die aus Werten bestehen, welche die Funkzugangsnetzwerk-Fähigkeit von zugeordneten Funkzugangsnetzwerken von den ausgewählten der Funkzugangsnetzwerke identifizieren, und selektives Verändern der Anzeige von irgendeiner Funkzugangsnetzwerk-Fähigkeit von irgendeinem der ausgewählten der Vielzahl von Funkzugangs-Netzwerken der Auflistung, die während der Handlung des Speichers gebildet wird, wenn eine Nachricht aus Werten besteht, die identifizieren, dass die Funkzugangsnetzwerk-Fähigkeiten sich von den in der Auflistung identifizierten unterscheiden; und
Auswählen **durch** welches der Funkzugangsnetzwerke aus der Vielzahl von Funkzugangsnetzwerken die Paketdaten kommuniziert werden sollen, wobei die Auswahl während der Handlung des Auswählens reagierend auf zumindest teilweise in Abhängigkeit der Auflistung, die von der während der Handlung des Speicherns festgelegten Datenbank gebildet wird, und reagierend auf die Detektion, die während der Handlung des Detektierens und des selektiven Veränderns gemacht wird, getroffen wird.

15. Verfahren nach Anspruch 14, wobei die Handlung des Detektierens weiters nachfolgend auf die Handlung des Speichems durchgeführt wird, und wobei die Handlungen des Detektierens und Speichems iterativ durchgeführt werden.

16. Verfahren nach Anspruch 14, welches weiters die Handlung aufweist, vor der Handlung des Detektierens, die Nachrichten zu dem mobilen Knoten zu senden.

17. Verfahren nach Anspruch 14, wobei die während der Handlung des Detektierens detektierten Nachrichten von ausgewählten Funkzugangsnetzwerken zu dem mobilen Knoten gesendet werden, und wobei Werte, die in den Nachrichten enthalten sind, während der Handlung des Speicherns selektiv gespeichert werden.

18. Verfahren nach Anspruch 17, wobei die Nachrichten, die während der Handlung des Detektierens detektiert werden, die Funkzugangsnetzwerks-Fähigkeiten von zugeordneten Funkzugangsnetzwerken der ausgewählten Funkzugangsnetzwerken identifizieren.

## Revendications

1. Appareil (32) destiné à un système de radiocommunication (10) comportant un noeud mobile (12) pouvant fonctionner de manière sélective au moins pour communiquer des données en paquets avec une partie réseau, la partie réseau étant composée d'une pluralité de réseaux d'accès radio (16-1, 16-2, 16-3, 16-4 et 16-5), un premier réseau d'accès radio de la pluralité formant un réseau domestique associé au noeud mobile, ledit appareil étant à même de faciliter la sélection du réseau d'accès radio parmi la pluralité de réseaux d'accès radio avec lequel le noeud mobile (12) communique, ledit appareil comprenant un élément de mémoire (34) réalisé au niveau du noeud mobile, ledit élément de mémoire dans lequel sont mémorisées des valeurs définissant une base de données (36), la base de données formant une liste identifiant au moins des réseaux sélectionnés parmi la pluralité de réseaux d'accès radio ainsi qu'une indication associée à ceux-ci de la capacité du réseau d'accès radio à fournir une connectivité de transmission de données en paquets avec le noeud mobile pour communiquer des données en paquets avec celui-ci, ledit appareil étant **caractérisé en ce que** la liste formée de la base de données définie au niveau dudit élément de mémoire peut être actualisée de manière dynamique et étant en outre **caractérisé par**:
un dispositif de détection (22) réalisé au niveau du noeud mobile, ledit dispositif de détection étant à même de détecter des messages remis au noeud mobile qui contiennent des valeurs identifiant les capacités de réseau d'accès radio de réseaux d'accès radio associés des réseaux sélectionnés parmi les réseaux d'accès radio et à même de modifier de manière sélective l'indication d'une capacité du réseau d'accès radio quelconque de n'importe lequel des réseaux sélectionnés parmi la pluralité de réseaux d'accès radio de la liste formée de la base de données définie au niveau de ladite base de données lorsqu'un message contient des valeurs identifiant les capacités de réseau d'accès radio qui sont différentes de celles identifiées dans la liste, et
un dispositif de sélection (42) à même d'accéder à la base de données définie au niveau dudit élément de mémoire, ledit dispositif de sélection étant à même de sélectionner celui des réseaux d'accès radio parmi la pluralité de réseaux d'accès radio par lequel communiquer les données en paquets, la sélection étant faite par ledit dispositif de sélection en réponse au moins en partie en fonction de la liste formée de la base de données définie au niveau dudit élément de mémoire et en réponse à des détections faites par ledit dispositif de détection.

2. Appareil suivant la revendication 1 dans lequel la partie réseau fournit des moyens pour diffuser les messages remis au noeud mobile (12), et dans lequel ledit dispositif de détection (22) fournit des moyens pour détecter de manière sélective des diffusions des messages par la partie réseau.

3. Appareil (32) suivant la revendication 2 dans lequel au moins des réseaux sélectionnés parmi les réseaux d'accès radio de la partie réseau fournissent des moyens pour diffuser des messages contenant des valeurs identifiant les capacités, dans lequel un message sélectionné diffusé par un réseau d'accès radio sélectionné contient des valeurs identifiant les capacités de réseau d'accès radio du réseau d'accès radio sélectionné à partir duquel le message est diffusé et dans lequel le dispositif de détection fournit des moyens (22) pour détecter les valeurs contenues dans le message sélectionné.

4. Appareil (32) suivant la revendication 3 dans lequel le message sélectionné diffusé par le réseau d'accès radio sélectionné contient en outre des valeurs identifiant le réseau d'accès radio à partir duquel le message est diffusé.

5. Appareil (32) suivant la revendication 4 dans lequel chaque réseau d'accès radio parmi la pluralité de réseaux d'accès radio est identifié par un code d'identification et dans lequel les valeurs identifiant le réseau d'accès radio contenues dans le message sélectionné comprennent le code d'identification.

6. Appareil suivant la revendication 5 dans lequel le système de radiocommunication (10) comprend un système de communication cellulaire pouvant fonctionner généralement selon un protocole de service GSM (Global System for Mobile communications/groupe spécial mobile) qui définit des indicatifs de pays du mobile et des codes de réseau du mobile et dans lequel les valeurs identifiant le réseau d'accès radio contenues dans le message sélectionné comprennent un indicatif de pays du mobile et un code de réseau du mobile associés au réseau d'accès radio à partir duquel le message est diffusé.

7. Appareil (32) suivant la revendication 3 dans lequel chaque réseau d'accès radio des au moins uns réseaux sélectionnés parmi les réseaux d'accès radio est à même de diffuser les messages sur des canaux de diffusion d'un ensemble de canaux de diffusion et dans lequel ledit dispositif de détection (22) est en outre à même de balayer de manière sélective les canaux de diffusion de l'ensemble de canaux de diffusion pour détecter les diffusions des messages par les réseaux sélectionnés parmi les réseaux d'accès radio.

8. Appareil (32) suivant la revendication 6 dans lequel ledit dispositif de détection (22) est en outre connecté audit élément de mémoire, ledit dispositif de détection (22) servant en outre à mémoriser au moins des valeurs sélectionnées qui définissent la base de données (36) au niveau dudit élément de mémoire.

9. Appareil (32) suivant la revendication 8 dans lequel ledit dispositif de détection (22) fournit des moyens pour en outre supprimer de manière sélective des valeurs de la base de données (36) définies au niveau dudit élément de mémoire (34).

10. Appareil (32) suivant la revendication 8 dans lequel la base de données (36) définie au niveau dudit élément de mémoire indique en outre la disponibilité des au moins uns réseaux sélectionnés parmi la pluralité de réseaux d'accès radio par lesquels les données en paquets sont transmises.

11. Appareil (32) suivant l'une quelconque des revendications précédentes dans lequel le noeud mobile (12) sert en outre à transmettre de manière sélective des données vocales et dans lequel la liste formée de la base de données (36) définie au niveau dudit élément de mémoire (34) identifie en outre les au moins uns réseaux sélectionnés parmi la pluralité de réseaux d'accès radio ainsi qu'une indication associée à ceux-ci de la capacité du réseau d'accès radio à fournir une connectivité de transmission de données vocales avec le noeud mobile pour communiquer des données vocales avec celui-ci.

12. Appareil (32) suivant la revendication 11 dans lequel ledit dispositif de sélection sert en outre à sélectionner de manière sélective le réseau d'accès radio parmi la pluralité de réseaux d'accès radio par lequel transmettre les données vocales.

13. Appareil (32) suivant l'une quelconque des revendications précédentes dans lequel la base de données (36) formant la liste définie au niveau dudit élément de mémoire (34) est créée en téléchargeant sur celui-ci un répertoire de base de données central, la base de données pouvant ensuite être actualisée de manière sélective.

14. Procédé de communication dans un système de radiocommunication comportant un noeud mobile pouvant fonctionner de manière sélective au moins pour communiquer des données en paquets avec une partie réseau composée d'une pluralité de réseaux d'accès radio, un premier réseau d'accès radio de la pluralité formant un réseau domestique associé au noeud mobile, ledit procédé servant au moins à faciliter la sélection du réseau d'accès radio parmi la pluralité de réseaux d'accès radio avec lequel le noeud mobile communique, ledit procédé comprenant la mémorisation de valeurs définissant une base de données, la base de données formant une liste identifiant au moins des réseaux sélectionnés parmi la pluralité de réseaux d'accès radio ainsi qu'une indication associée à ceux-ci de la capacité du réseau d'accès radio à fournir une connectivité de transmission de données en paquets avec le noeud mobile pour communiquer des données en paquets avec celui-ci, ledit procédé étant **caractérisé par**:
la détection de messages remis à ce noeud mobile qui contiennent des valeurs identifiant les capacités de réseau d'accès radio de réseaux d'accès radio associés des réseaux sélectionnés parmi les réseaux d'accès radio et la modification de manière sélective de l'indication d'une capacité du réseau d'accès radio quelconque de n'importe lequel des réseaux sélectionnés parmi la pluralité de réseaux d'accès radio de la liste formée pendant ladite opération de mémorisation lorsqu'un message contient des valeurs identifiant les capacités de réseau d'accès radio qui sont différentes de celles identifiées dans la liste, et
la sélection de celui des réseaux d'accès radio parmi la pluralité de réseaux d'accès radio par lequel communiquer les données en paquets, la sélection étant faite pendant ladite opération de sélection en réponse au moins en partie en fonction de la liste formée de la base de données définie pendant ladite opération de mémorisation et en réponse à la détection faite pendant ladite opération de détection et de modification sélective.

15. Procédé suivant la revendication 14 dans lequel ladite opération de détection est en outre exécutée à la suite de ladite opération de mémorisation et dans lequel lesdites opérations de détection et de mémorisation sont exécutées de manière itérative.

16. Procédé suivant la revendication 14 comprenant en outre l'opération, avant ladite opération de détection, d'envoi des messages au noeud mobile.

17. Procédé suivant la revendication 14 dans lequel les messages détectés pendant ladite opération de détection sont envoyés au noeud mobile par des réseaux d'accès radio sélectionnés et dans lequel les valeurs contenues dans les messages sont mémorisées de manière sélective pendant ladite opération de mémorisation.

18. Procédé suivant la revendication 17 dans lequel les messages détectés pendant ladite opération de détection identifient les capacités de réseau d'accès radio de réseaux d'accès radio associés parmi les réseaux d'accès radio sélectionnés.
